(19) Europäisches Patentamt
European Patent Office
Office européen des brevets

(11) **EP 4 750 006 A1**

(12) **EUROPEAN PATENT APPLICATION**
published in accordance with Art. 153(4) EPC

(43) Date of publication:
**27.05.2026 Bulletin 2026/22**

(21) Application number: **24853515.5**

(22) Date of filing: **23.07.2024**

(51) International Patent Classification (IPC):
**H04L 25/02** $^{(2006.01)}$   **H04W 72/04** $^{(2023.01)}$

(52) Cooperative Patent Classification (CPC):
**H04J 13/00; H04L 5/00; H04L 25/02; H04W 72/04**

(86) International application number:
**PCT/CN2024/106938**

(87) International publication number:
**WO 2025/036103 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 CN 202311023632**

(71) Applicant: **HUAWEI TECHNOLOGIES CO., LTD.**
**Shenzhen 518129 (CN)**

(72) Inventors:
• **XU, Shucong**
  **Shenzhen, Guangdong 518129 (CN)**
• **QIAN, Jin**
  **Shenzhen, Guangdong 518129 (CN)**
• **LIU, Jinxue**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SOUNDING REFERENCE SIGNAL CONFIGURATION METHOD AND APPARATUS**

(57)     Embodiments of this application provide a measurement reference signal configuration method and an apparatus. A network device determines a first SRS resource set and a first SRS base sequence group, where a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, and the combination of the first SRS resource set and the first SRS base sequence group corresponds to a first cell; and configures, based on the first SRS resource set and the first SRS base sequence group, a terminal device in the first cell to send an SRS. According to the solutions, when a network device configures an SRS resource and an SRS base sequence group for a cell, collaborative cooperation between a plurality of cells is considered, so that a problem of SRS signal interference between different cells can be alleviated or avoided.

```
                                                    S201
A network device determines a first SRS resource set
      and a first SRS base sequence group

                        │
                        ▼
                                                    S202
     The network device configures, based on the first
   SRS resource set and the first SRS base sequence
  group, a terminal device in a first cell to send an SRS
```

FIG. 2

**Description**

CROSS-REFERENCE TO RELATED APPLICATIONS

This application claims priority to Chinese Patent Application No. 202311023632.5, filed with the China National Intellectual Property Administration on August 14, 2023 and entitled "MEASUREMENT REFERENCE SIGNAL CONFIGURATION METHOD AND APPARATUS", which is incorporated herein by reference in its entirety.

TECHNICAL FIELD

This application relates to the field of communication technologies, and in particular, to a measurement reference signal configuration method and an apparatus.

BACKGROUND

A measurement reference signal (sounding reference signal, SRS) is a signal used to measure radio channel state information (channel state information, CSI) between a terminal device and a network device. In a new radio (new radio, NR) system, a terminal device may send an SRS based on a resource configured by a network device and an identifier (identifier, ID) of an SRS base sequence group. The network device performs channel estimation based on the received SRS to obtain CSI, and further performs operations such as beam management and weight calculation based on the CSI.

The SRS is a sequence signal generated based on a Zadoff-Chu (Zadoff-Chu) sequence. According to the descriptions in the 3rd generation partnership project (3rd generation partnership project, 3GPP) technical specification (technical specification, TS) 38.211, the conventional technology supports a maximum of 30 SRS base sequence groups, and the terminal device generates an SRS signal based on an SRS base sequence group allocated by the network device to the terminal device (for example, the network device notifies the terminal device of the SRS base sequence group by using an $n\_ID^{SRS}$ parameter in standard signaling).

In an actual network, a plurality of cells are contiguously connected to provide a wireless connection for a terminal device in an area. When a quantity of cells exceeds 30, different cells inevitably reuse a same SRS base sequence group. In this case, if terminal devices in different cells send SRSs at a same resource position, a problem of SRS signal interference between different cells occurs, affecting channel estimation performed by the network device.

SUMMARY

Embodiments of this application provide a measurement reference signal configuration method and an apparatus, to resolve a problem of SRS signal interference between different cells, and improve reliability and accuracy of channel estimation performed by a network device.

According to a first aspect, an SRS configuration method is provided, where the method may be applied to a network device or a chip in the network device, and an example in which the method is applied to the network device is used. The network device determines a first SRS resource set and a first SRS base sequence group, where a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1; and configures, based on the first SRS resource set and the first SRS base sequence group, a terminal device in the first cell to send an SRS.

In the foregoing solution, when the network device configures an SRS resource and an SRS base sequence group for a cell, collaborative cooperation between a plurality of cells is considered. To be specific, an SRS available resource is divided into M non-overlapping SRS resource sets, and the M non-overlapping SRS resource sets and the N SRS base sequence groups are arranged and combined to obtain M*N different combinations, where the M*N combinations are in one-to-one correspondence with the M*N cells. When allocating an SRS resource and an SRS base sequence group to each cell (for example, the first cell), the network device allocates, to the cell, an SRS resource set and an SRS base sequence group that are in the M*N combinations and that correspond to the cell (for example, allocates the first SRS resource set and the first SRS base sequence group to the first cell). In this way, SRS collision can be avoided between SRSs sent by terminal devices in the M*N cells, thereby alleviating or avoiding a problem of SRS signal interference between different cells, improving reliability of channel estimation performed by the network device, and improving communication reliability.

In a possible design, an identifier of the first cell and an identifier of the first SRS resource set satisfy the following

relationship:

$$\lambda = (X + n) \bmod M,$$

where

X is the identifier of the first cell, $\lambda$ is the identifier of the first SRS resource set, and n is an offset.

Certainly, the foregoing formula is merely an example, and actually, there may be other variations.

In a possible design, the identifier of the first cell and an identifier of the first SRS base sequence group satisfy the following relationship:

$$\alpha = (X + p) + (\lfloor (X + q)/N \rfloor \bmod M),$$

where $\alpha$ is the identifier of the first SRS base sequence group, and p and q are offsets.

Certainly, the foregoing formula is merely an example, and actually, there may be other variations.

In a possible design, the identifier of the first cell and an identifier of the first SRS base sequence group satisfy the following relationship:

$$\alpha = (X + p) + (\lceil (X + q)/N \rceil \bmod M),$$

where $\alpha$ is the identifier of the first SRS base sequence group, and p and q are offsets.

Certainly, the foregoing formula is merely an example, and actually, there may be other variations.

In a possible design, the identifier of the first cell is a physical cell identifier (physical cell identifier, PCI), a transmission reception point (transmission reception point, TRP) identifier, or a virtual cell identifier. Certainly, the foregoing is merely an example, and actually, there may be other identifier forms.

In a possible design, N is a positive integer less than or equal to 30.

In a possible design, the network device may send first SRS configuration information to a first terminal device in the first cell based on the first SRS resource set and the first SRS base sequence group, where the first SRS configuration information indicates a first SRS resource and the first SRS base sequence group, and the first SRS resource belongs to the first SRS resource set.

In this way, the first SRS base sequence group and the first SRS resource in the first SRS resource set can be configured for the first terminal device, thereby ensuring reliability of the solution.

According to a second aspect, an SRS configuration method is provided, where the method may be applied to a terminal device or a chip in the terminal device, and an example in which the method is applied to a first terminal device in a first cell is used. The first terminal device receives first SRS configuration information from a network device, where the first SRS configuration information indicates a first SRS resource and a first SRS base sequence group; and the first SRS resource belongs to a first SRS resource set, a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include the first cell, the combination of the first SRS resource set and the first SRS base sequence group corresponds to the first cell, M is a positive integer greater than 1, and N is a positive integer greater than 1; and

sends an SRS on the first SRS resource based on the first SRS base sequence group.

In a possible design, an identifier of the first cell and an identifier of the first SRS resource set satisfy the following relationship:

$$\lambda = (X + n) \bmod M,$$

where X is the identifier of the first cell, $\lambda$ is the identifier of the first SRS resource set, and n is an offset.

In a possible design, the identifier of the first cell and an identifier of the first SRS base sequence group satisfy the following relationship:

$$\alpha = (X + p) + (\lfloor (X + q)/N \rfloor \bmod M),$$

where $\alpha$ is the identifier of the first SRS base sequence group, and p and q are offsets.

In a possible design, the identifier of the first cell and an identifier of the first SRS base sequence group satisfy the following relationship:

$$\alpha = (X + p) + (\lceil (X + q)/N \rceil \bmod M),$$

where $\alpha$ is the identifier of the first SRS base sequence group, and p and q are offsets.

In a possible design, the identifier of the first cell is a physical cell identifier PCI, a transmission reception point TRP identifier, or a virtual cell identifier.

In a possible design, N is a positive integer less than or equal to 30.

According to a third aspect, a communication apparatus is provided. The apparatus includes a module, a unit, or a technical means configured to perform the method according to the first aspect or any possible design of the first aspect. For example, the apparatus may include:

a processing module, configured to determine a first SRS resource set and a first SRS base sequence group, where a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1; and

a transceiver module, configured to configure, based on the first SRS resource set and the first SRS base sequence group, a terminal device in the first cell to send an SRS.

According to a fourth aspect, a communication apparatus is provided. The apparatus includes a module, a unit, or a technical means configured to perform the method according to the second aspect or any possible design of the second aspect. For example, the apparatus may include:

a transceiver module, configured to receive first SRS configuration information from a network device, where the first SRS configuration information indicates a first SRS resource and a first SRS base sequence group; the first SRS resource belongs to a first SRS resource set, a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1; and the transceiver module is further configured to send an SRS on the first SRS resource based on the first SRS base sequence group.

According to a fifth aspect, a communication apparatus is provided, including a processor, where the processor is coupled to a memory, the memory is configured to store a program or instructions, and when the program or the instructions are executed by the processor, the communication apparatus is caused to perform the method according to the first aspect or any possible design of the first aspect, or the communication apparatus is caused to perform the method according to the second aspect or any possible design of the second aspect.

According to a sixth aspect, a computer-readable storage medium is provided. The storage medium stores a computer program or instructions; and when the computer program or the instructions are executed by a communication apparatus, the method according to the first aspect or any possible design of the first aspect is implemented, or the method according to the second aspect or any possible design of the second aspect is implemented.

According to a seventh aspect, a communication system is provided, including the communication apparatus according to the third aspect or any possible design of the third aspect and the communication apparatus according to the fourth aspect or any possible design of the fourth aspect.

According to an eighth aspect, a computer program product is provided. The computer program product includes a computer program or instructions; and when the computer program or the instructions are run by a communication apparatus, the method according to the first aspect or any possible design of the first aspect is performed, or the method according to the second aspect or any possible design of the second aspect is performed.

For technical effects that can be achieved by the second aspect to the eighth aspect, refer to descriptions of technical effects that can be achieved by corresponding design solutions in the first aspect. Details are not described herein again in this application.

BRIEF DESCRIPTION OF DRAWINGS

FIG. 1 is a diagram of a communication system according to an embodiment of this application;
FIG. 2 is a flowchart of an SRS configuration method according to an embodiment of this application;

FIG. 3 is a diagram in which a network device configures a first terminal device to send an SRS;

FIG. 4 is a diagram of a structure of a communication apparatus according to an embodiment of this application; and

FIG. 5 is a diagram of a structure of another communication apparatus according to an embodiment of this application.

## DESCRIPTION OF EMBODIMENTS

The terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of a single item (piece) or a plurality of items (pieces). For example, at least one item (piece) of a, b, or c may represent: a, b, c, a and b, b and c, a and c, or a, b, and c. In this application, "A exceeds B" indicates that A is greater than B, and "A does not exceed B" indicates that A is less than or equal to B.

In addition, unless otherwise stated, ordinal numbers such as "first" and "second" in embodiments of this application are for distinguishing between a plurality of objects, but are not intended to limit an order, a time sequence, priorities, or importance degrees of the plurality of objects. For example, a first priority criterion and a second priority criterion are merely used to distinguish different criteria, and are not used to indicate different content, priorities, or importance degrees of the two types of criteria.

In addition, the terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

Embodiments of this application may be applied to a scenario in which a terminal device communicates with a network device.

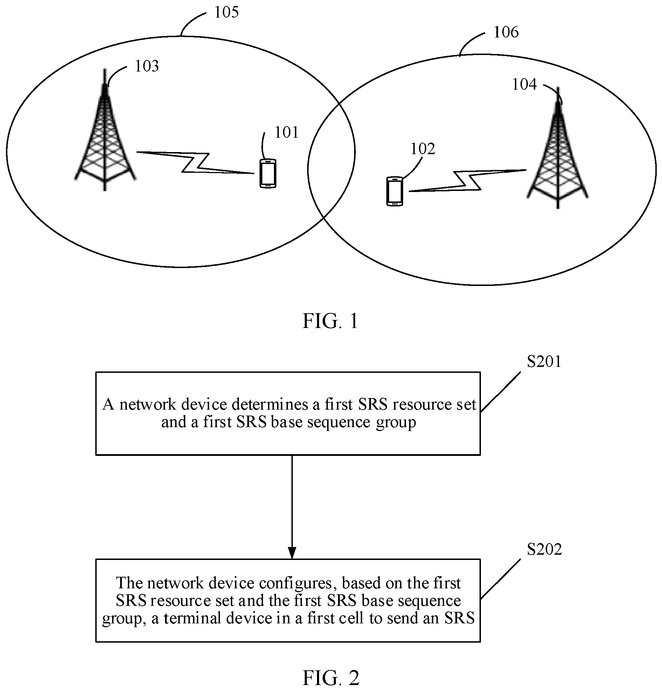

FIG. 1 is a diagram of a communication system according to an embodiment of this application. The communication system includes at least one terminal device and at least one network device. FIG. 1 shows two terminal devices and two network devices, namely, a terminal device 101, a terminal device 102, a network device 103, and a network device 104. However, this is not actually limited thereto.

The network device 103 is configured to perform access management and switching management on the terminal device 101, and communicate with a core network. The network device 104 is configured to perform access management and switching management on the terminal device 102, and communicate with a core network.

The network device described in embodiments of this application includes a radio access network (radio access network, RAN) device. The radio access network device may also be sometimes referred to as an access network node, a RAN node, a RAN entity, an access node, a RAN network element, or the like, and is a part of the communication system, to help a terminal implement radio access.

The radio access network device is, for example, a base station (base station, BS), or includes a base station, a radio resource management device configured to control the base station, and the like. For example, the base station may include an evolved NodeB (NodeB, eNB, or e-NodeB, evolved NodeB) in a long term evolution (long term evolution, LTE) system or a long term evolution-advanced (long term evolution-advanced, LTE-A) system; may include a next generation NodeB (next generation NodeB, gNB), a next generation evolved NodeB (next generation evolved NodeB, ng-eNB), or an enhanced next generation NodeB (enhanced next generation NodeB, en-gNB) in a 5th generation (5th generation, 5G) mobile communication technology new radio (new radio, NR) system; or may include a central unit (central unit, CU) and a distributed unit (distributed unit, DU) in a cloud radio access network (cloud radio access network, Cloud RAN) system. This is not limited in embodiments of this application.

In a possible scenario, a plurality of RAN nodes cooperatively assist a terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In some embodiments, the network device may further include a core network device.

The terminal device in embodiments of this application may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, remote medical, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application. It should be understood that the terminal device may be configured to support communication with the network device through a universal user to network interface (universal user to network interface, Uu).

The network device may manage one or more cells. In FIG. 1, an example in which each network device manages one cell is used. To be specific, the network device 103 manages a cell 105, and the network device 104 manages a cell 106. This is not actually limited thereto. The cell managed by the network device may also be referred to as a cell of the network device, a cell covered by the network device, or the like.

Coverage areas and/or frequency domain resources (for example, carriers or carrier frequency bands) of different cells are different. The network device may communicate, by using a radio transmission resource of a cell managed by the network device, with a terminal device in the cell. For example, the network device 103 may communicate with the terminal device 101 by using a radio transmission resource of the cell 105, and the network device 104 may communicate with the terminal device 102 in the cell 106 by using a transmission resource of the cell 106.

Cells that are geographically adjacent may be "neighboring cells" (or referred to as "neighboring cells") of each other. Coverage areas of neighboring cells may not overlap or at least partially overlap. As shown in FIG. 1, the cell 105 and the cell 106 partially overlap. It may be understood that the coverage areas of the two cells may alternatively be that a coverage area of one cell may include a coverage area of the other cell.

The communication system shown in FIG. 1 may support various radio access technologies (radio access technologies, RATs). For example, the communication system shown in FIG. 1 may be a 5th generation (5th generation, 5G) communication system (which may also be referred to as a new radio (new radio, NR) communication system), a 6G communication system, or a future-oriented evolved system.

It may be understood that a network architecture and a service scenario described in embodiments of this application are intended to describe technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

To ensure reliability of communication between the network device and the terminal device, the network device may configure the terminal device to send a measurement reference signal (sounding reference signal, SRS), and perform channel estimation by measuring the SRS of the terminal device.

The SRS is a signal used to measure radio channel state information (channel state information, CSI) between the terminal device and the network device. In an NR system, a terminal device may send an SRS at a corresponding resource position according to a specified configuration based on parameters such as a resource (such as a periodicity, a time domain position, a frequency domain position, and a cyclic shift) configured by a network device and an identifier (identifier, ID) of an SRS base sequence group. The network device may perform channel estimation based on the received SRS to obtain CSI, and further perform operations such as beam management and weight calculation based on the CSI.

The SRS is a sequence signal generated based on a Zadoff-Chu (Zadoff-Chu) sequence. According to the descriptions in the 3rd generation partnership project (3rd generation partnership project, 3GPP) technical specification (technical specification, TS) 38.211, the NR system supports a maximum of 30 SRS base sequence groups, and the terminal device determines, based on an identifier (for example, $n_{ID}^{SRS}$) of an SRS base sequence group delivered by the network device, an SRS base sequence group allocated by the network device to the terminal device, and generates an SRS signal based on the SRS base sequence group.

In an actual network, a plurality of cells are contiguously connected to provide a wireless connection for a terminal device in an area. When a quantity of cells exceeds 30, a case in which different cells reuse a same SRS base sequence group inevitably occurs. In this case, if terminal devices in different cells send SRSs at a same resource position, a problem of SRS signal interference between different cells occurs, affecting channel estimation performed by the network device.

In view of this, the technical solutions in embodiments of this application are provided, so that the problem of SRS signal interference between different cells may be alleviated or avoided, reliability of channel estimation performed by the network device may be improved, and reliability of communication between the network device and the terminal device may be improved.

FIG. 2 is a flowchart of an SRS configuration method according to an embodiment of this application. The method may be applied to the communication system shown in FIG. 1, and the method includes S201 and S202.

S201. A network device determines a first SRS resource set and a first SRS base sequence group.

The network device may be the network device 103 or the network device 104 shown in FIG. 1.

A combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1. The first cell is any one of the M*N cells.

The first cell is a cell managed by the network device. Optionally, the M*N cells may include all cells managed by the network device. Further, optionally, the M*N cells further include a cell managed by another network device. For example, when the network device is the network device 103 shown in FIG. 1, the first cell may be the cell 105; and the M*N cells may include the cell 105 and the cell 106, and may further include another cell. This is not limited.

During specific implementation, the network device may obtain all available resources (namely, SRS resources) of an SRS based on a configuration of a communication system (for example, an NR system). The resources may include one or more of a time domain resource, a frequency domain resource, a code domain resource, and the like. The network device may divide all the available resources into M non-overlapping resource sets, and each resource set corresponds to at least one of a determined time domain resource, a determined frequency domain resource, a determined code domain resource, and the like. Identifiers of the M resource sets are, for example, 0, 1, 2, ..., and M-1 in sequence.

The time domain resource includes but is not limited to one or more of a periodicity, a slot position, a start symbol, a symbol length, and the like. The frequency domain resource includes but is not limited to one or more of a frequency comb, a frequency domain start position, bandwidth, frequency hopping, and the like in frequency domain. The code domain resource includes but is not limited to a cyclic shift.

The N SRS base sequence groups are a part or all of SRS base sequence groups in all SRS base sequence groups supported by the system. For example, if the system supports 30 SRS base sequence groups, a value of N is a positive integer greater than 1 and less than 31. It may be understood that, with evolution of the communication system, a quantity of SRS base sequence groups supported by the system may be different. This is not limited in this embodiment of this application. For ease of description, the following mainly uses N=30 as an example.

Each base sequence group may include one or more SRS base sequences, for example, one base sequence or two base sequences.

The M resource sets and the N SRS base sequence groups are arranged and combined, so that a maximum of M*N different combinations of resource sets and SRS base sequence groups can be determined, and a scenario in which SRS resource positions and SRS base sequence groups do not overlap simultaneously in M*N cells may be supported, that is, the M*N combinations are in one-to-one correspondence with the M*N cells. Therefore, SRS signal interference between the M*N cells can be avoided.

It may be understood that an identifier of the SRS base sequence group in this embodiment of this application may be an identifier of the SRS base sequence group specified in a protocol, or may be another identifier. When the identifier of the SRS base sequence group is not the identifier of the SRS base sequence group specified in the protocol, the terminal device receives the identifier of the SRS base sequence group, and may convert (or map) the identifier of the SRS base sequence group to the identifier of the SRS base sequence group specified in the protocol.

For example, when a value range of the identifier (or a number) of the SRS base sequence group specified in the protocol is [a, b] (for example, [0, 29]), a value range of the identifier of the SRS base sequence group that is configured by the network device for the terminal device may be within the value range [a, b] specified in the protocol, or may not be limited to the value range [a, b] specified in the protocol, for example, may be greater than b. If the identifier of the SRS base sequence group that is configured by the network device for the terminal device exceeds [a, b], after receiving the identifier of the SRS base sequence group sent by the network device, the terminal device may perform an operation (for example, a modulo operation) on the identifier, and then map the identifier to the value range [a, b] specified in the protocol. For example, the identifier of the SRS base sequence group that is configured by the network device for the terminal device is $\alpha$, and the terminal device may perform the following operation on $\alpha$:

$$\alpha' = (f\_gh\,(n\_{(s, f)}^{\mu},\, l^{\wedge'}) + \alpha) \bmod (b - a + 1),$$

where $\alpha'$ is an identifier of the SRS base sequence group that is finally determined by the terminal device, $\alpha'$ falls within the value range specified in the protocol, $\alpha'$ may uniquely determine one SRS base sequence group, $n\_{(s, f)}^{\mu}$ is a slot number in a radio frame when a subcarrier spacing is configured as $\mu$, $l^{\wedge'}$ is an OFDM symbol offset, and $f\_gh\,(n\_{(s, f)}^{\mu},\, l^{\wedge'})$ is a mapping function and a value thereof has the following three cases:

when a base station configures UE as non-group hopping and non-sequence hopping, $f\_gh$ ($n_{(s, f)}^\mu$, $l^{\wedge\prime}$) is 0; when the base station configures the UE as sequence hopping, $f\_gh$ ($n_{(s, f)}^\mu$, $l^{\wedge\prime}$) is 0; and

when the base station configures the UE as group hopping, $f\_gh$ ($n_{(s, f)}^\mu$, $l^{\wedge\prime}$) = $(\Sigma_{(m = 0)}^{7}$ [c(8($n_{(s, f)}^\mu$ N_symb"slot + 1_0 + $l^{\wedge\prime}$) + m)·2^m]) mod 30, where N_symb^slot is a quantity of OFDM symbols in one slot, and 1_0 is an OFDM symbol offset.

For example, M=3, N=30, and 90 cells are used as an example. A value of an identifier of a cell is a positive integer from 0 to 89, a value of the identifier of the SRS base sequence group specified in the protocol is a positive integer from 0 to 29, and a value of an identifier of the resource set is a positive integer from 0 to 2. Refer to Table 1. There may be 90 different combinations of resource sets and SRS base sequence groups, which respectively correspond to 90 cells.

Table 1

| Cell | Resource set | SRS base sequence group $\alpha$ | Cell | Resource set | SRS base sequence group $\alpha$ | Cell | Resource set | SRS base sequence group $\alpha$ |
|---|---|---|---|---|---|---|---|---|
| 0 | 0 | 0 | 30 | 0 | 31 | 60 | 0 | 62 |
| 1 | 1 | 1 | 31 | 1 | 32 | 61 | 1 | 63 |
| 2 | 2 | 2 | 32 | 2 | 33 | 62 | 2 | 64 |
| 3 | 0 | 3 | 33 | 0 | 34 | 63 | 0 | 65 |
| 4 | 1 | 4 | 34 | 1 | 35 | 64 | 1 | 66 |
| 5 | 2 | 5 | 35 | 2 | 36 | 65 | 2 | 67 |
| 6 | 0 | 6 | 36 | 0 | 37 | 66 | 0 | 68 |
| 7 | 1 | 7 | 37 | 1 | 38 | 67 | 1 | 69 |
| 8 | 2 | 8 | 38 | 2 | 39 | 68 | 2 | 70 |
| 9 | 0 | 9 | 39 | 0 | 40 | 69 | 0 | 71 |
| 10 | 1 | 10 | 40 | 1 | 41 | 70 | 1 | 72 |
| 11 | 2 | 11 | 41 | 2 | 42 | 71 | 2 | 73 |
| 12 | 0 | 12 | 42 | 0 | 43 | 72 | 0 | 74 |
| 13 | 1 | 13 | 43 | 1 | 44 | 73 | 1 | 75 |
| 14 | 2 | 14 | 44 | 2 | 45 | 74 | 2 | 76 |
| 15 | 0 | 15 | 45 | 0 | 46 | 75 | 0 | 77 |
| 16 | 1 | 16 | 46 | 1 | 47 | 76 | 1 | 78 |
| 17 | 2 | 17 | 47 | 2 | 48 | 77 | 2 | 79 |
| 18 | 0 | 18 | 48 | 0 | 49 | 78 | 0 | 80 |
| 19 | 1 | 19 | 49 | 1 | 50 | 79 | 1 | 81 |
| 20 | 2 | 20 | 50 | 2 | 51 | 80 | 2 | 82 |
| 21 | 0 | 21 | 51 | 0 | 52 | 81 | 0 | 83 |
| 22 | 1 | 22 | 52 | 1 | 53 | 82 | 1 | 84 |
| 23 | 2 | 23 | 53 | 2 | 54 | 83 | 2 | 85 |
| 24 | 0 | 24 | 54 | 0 | 55 | 84 | 0 | 86 |
| 25 | 1 | 25 | 55 | 1 | 56 | 85 | 1 | 87 |
| 26 | 2 | 26 | 56 | 2 | 57 | 86 | 2 | 88 |
| 27 | 0 | 27 | 57 | 0 | 58 | 87 | 0 | 89 |
| 28 | 1 | 28 | 58 | 1 | 59 | 88 | 1 | 90 |

(continued)

| Cell | Resource set | SRS base sequence group α | Cell | Resource set | SRS base sequence group α | Cell | Resource set | SRS base sequence group α |
|---|---|---|---|---|---|---|---|---|
| 29 | 2 | 29 | 59 | 2 | 60 | 89 | 2 | 91 |

In Table 1, a modulo operation needs to be performed on a part in which the value of the identifier of the base sequence group is greater than or equal to 30, to map the part to a range of 0 to 29. For example, 31 mod 30 = 1, which corresponds to a base sequence group whose number is 1.

In a possible design, the network device may store a correspondence between the M*N combinations and the M*N cells (for example, store Table 1). When the network device determines an SRS resource set and an SRS sequence group for the first cell, the network device may query the correspondence based on an identifier of the first cell, to determine the SRS resource set and the SRS base sequence group that correspond to the first cell, that is, the first SRS resource set and the first SRS base sequence group.

In another possible design, an identifier of the first cell and an identifier of the first SRS resource set satisfy the following relationship:

$$\lambda = (X + n) \bmod M,$$

where

X is the identifier of the first cell, λ is the identifier of the first SRS resource set, "mod" indicates a modulo operation, and n is an offset. A value of X is, for example, 0 or a positive integer, and a value of n is, for example, an integer (for example, n = -2, -1, 0, 1, 2, or 3). A specific value may be flexibly set based on a requirement. This is not limited in this application.

The identifier of the first cell and an identifier of the first SRS base sequence group satisfy the following relationship:

$$\alpha = (X + p) + (\lfloor (X + q)/N \rfloor \bmod M) \text{ or } \alpha = (X + p) + (\lceil (X + q)/N \rceil \bmod M),$$

where α is the identifier (for example, n_"ID"^"SRS") of the first SRS base sequence group, "⌊ ⌋" represents rounding down, and "⌈ ⌉" represents rounding up.

It may be understood that the foregoing formula is merely an example, and there may be other variations during actual application.

Correspondingly, when determining the SRS resource set and the SRS base sequence group for the first cell, the network device may determine the first SRS resource set and the first SRS base sequence group based on the identifier of the first cell and according to the foregoing formula.

An example in which n = 0, p = 0, q = 0, M = 3, and N = 30 is used. When X = 0, X is substituted to the formulas λ = (X + n) mod M and $\alpha = (X + p) + (\lfloor (X + q)/N \rfloor \bmod M)$ to obtain λ = 0 and α = 0, that is, an identifier of a resource set corresponding to a cell 0 is 0, and an identifier of an SRS base sequence group is 0; when X = 1, X is substituted to the formulas λ = (X + n) mod M and $\alpha = (X + p) + (\lfloor (X + q)/N \rfloor \bmod M)$ to obtain λ = 1 and α = 1, that is, an identifier of a resource set corresponding to a cell 1 is 1, and an identifier of an SRS base sequence group is 1; and when X = 89, X is substituted to the formulas λ = (X + n) mod M and $\alpha = (X + p) + (\lfloor (X + q)/N \rfloor \bmod M)$ to obtain λ = 2 and α = 91, an identifier of a resource set corresponding to a cell 89 is 2, and an identifier of an SRS base sequence group is 91 (the terminal device may map a value of the identifier of the SRS base sequence group to a range of 0 to 29).

It may be understood that, the foregoing is merely examples, and actually, the identifier of the cell, the identifier of the resource set, and the identifier of the SRS base sequence group are not limited thereto.

In this embodiment of this application, the identifier of the first cell may be a physical cell identifier (physical cell identifier, PCI), a transmission reception point (transmission reception point, TRP) identifier, a virtual cell identifier (for example, an index value), or the like. This is not specifically limited in this application.

S202. The network device configures, based on the first SRS resource set and the first SRS base sequence group, a terminal device in the first cell to send an SRS.

Specifically, the network device may configure different resources for different terminal devices in the first cell, and configure the first SRS base sequence group for each terminal device. The configuration of the resources and the configuration of the first SRS base sequence group may be performed simultaneously, or may be performed separately and sequentially. This is not limited in this application.

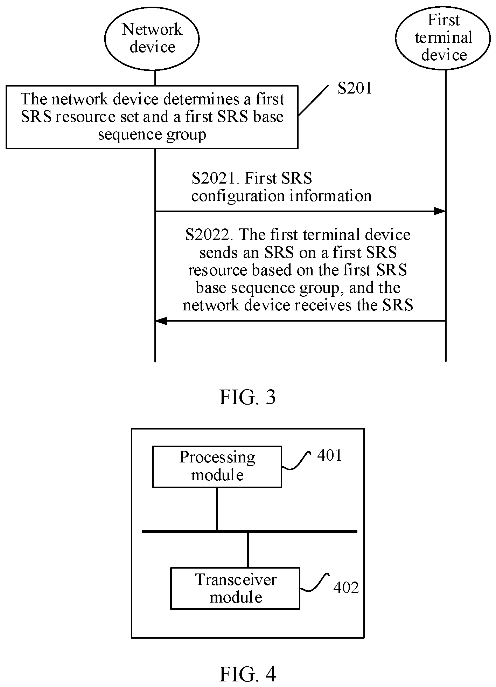

Refer to FIG. 3. An example in which the network device configures a first terminal device in the first cell to send an SRS is used, the following steps S2021 and S2022 may be included.

S2021. The network device sends first SRS configuration information to the first terminal device in the first cell based on the first SRS resource set and the first SRS base sequence group; and correspondingly, the first terminal device receives the first SRS configuration information from the network device.

The first SRS configuration information indicates a first SRS resource and the first SRS base sequence group, and the first SRS resource belongs to the first SRS resource set. For example, the first SRS configuration information includes an identifier of the first SRS resource and the identifier of the first SRS base sequence group.

For example, when the network device is the network device 103, the first terminal device is any terminal device in the cell 105, for example, the terminal device 101. For example, when the network device is the network device 104, the first terminal device is any terminal device in the cell 106, for example, the terminal device 102.

S2022. The first terminal device sends an SRS on the first SRS resource based on the first SRS base sequence group; and correspondingly, the network device receives the SRS sent by the first terminal device.

For configuration of another terminal device in the first cell, refer to S2021 and S2022, and a difference lies in that a configured SRS resource is different from the first SRS resource. For example, the network device sends second SRS configuration information to a second terminal device in the first cell based on the first SRS resource set and the first SRS base sequence group, where the second SRS configuration information indicates a second SRS resource and the first SRS base sequence group, the second SRS resource belongs to the first SRS resource set, and the second SRS resource is different from the first SRS resource.

In the foregoing solution, when allocating an SRS resource and an SRS base sequence group to a cell, the network device takes collaborative cooperation between a plurality of cells into consideration (that is, divides all SRS available resources into M non-overlapping SRS resource sets, arranges and combines the M non-overlapping SRS resource sets and the N SRS base sequence groups to obtain M*N different combinations, and configures an SRS resource and an SRS base sequence group for each cell based on the M*N combinations, so that the M*N combinations are in one-to-one correspondence with the M*N cells, ensuring that no collision occurs between SRSs sent by terminal devices of a maximum of the M*N cells), thereby alleviating or avoiding a problem of SRS signal interference between different cells, improving reliability of channel estimation performed by the network device, and improving communication reliability. For example, when M = 3 and N = 30, it can be ensured that SRS signal interference does not occur between a maximum of 90 cells. Therefore, according to a cell coverage situation in actual life, SRS signal interference between cells can be basically avoided.

The foregoing describes the method provided in embodiments of this application with reference to the accompanying drawings, and the following describes an apparatus provided in embodiments of this application with reference to the accompanying drawings.

An embodiment of this application provides a communication apparatus. The apparatus includes a module/unit/means configured to perform the method performed by the network device or the terminal device in the foregoing method embodiments. The module/unit/means may be implemented by software, hardware, or hardware by executing corresponding software.

For example, refer to FIG. 4, and the communication apparatus may include a processing module 401 and a transceiver module 402.

When the communication apparatus is a network device or applied to a network device, the processing module 401 may be configured to determine a first SRS resource set and a first SRS base sequence group, where a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1; and the transceiver module 402 may be configured to configure, based on the first SRS resource set and the first SRS base sequence group, a terminal device in the first cell to send an SRS.

For example, when a first terminal device in the first cell is configured to send an SRS, the transceiver module 402 may be configured to send first SRS configuration information to the first terminal device in the first cell based on the first SRS resource set and the first SRS base sequence group, where the first SRS configuration information indicates a first SRS resource and the first SRS base sequence group, and the first SRS resource belongs to the first SRS resource set.

For example, when the communication apparatus is a terminal device or applied to a terminal device, the transceiver module 402 may be configured to receive first SRS configuration information from a network device, where the first SRS configuration information indicates a first SRS resource and a first SRS base sequence group; the first SRS resource belongs to a first SRS resource set, a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells include a first cell, the combination of the first SRS resource set and the first SRS base sequence group corresponds to the first cell, M is a positive integer greater than 1, and N is a positive integer greater than 1; and the transceiver module 402 may be further configured to send an SRS on the first SRS resource based on the first SRS base sequence group. Optionally, the processing module 401 is configured to generate the SRS.

In a possible design, an identifier of the first cell and an identifier of the first SRS resource set may satisfy the following relationship:

$$\lambda = (X + n) \bmod M,$$

where

X is the identifier of the first cell, $\lambda$ is the identifier of the first SRS resource set, and n is an offset.

Further, the identifier of the first cell and an identifier of the first SRS base sequence group may satisfy the following relationship:

$$\alpha = (X + p) + (\lfloor (X + q)/N \rfloor \bmod M) \text{ or } \alpha = (X + p) + (\lceil (X + q)/N \rceil \bmod M),$$

where $\alpha$ is the identifier of the first SRS base sequence group, and p and q are offsets.

The identifier of the first cell may be a physical cell identifier PCI, a transmission reception point TRP identifier, a virtual cell identifier, or the like. This is not limited in this embodiment of this application.

In some embodiments, a value of N may be determined based on a quantity of SRS base sequence groups supported by a communication system. This is not specifically limited in this application. For example, when the communication system supports 30 SRS base sequence groups, N may be a positive integer less than or equal to 30.

During specific implementation, the apparatus may have a plurality of product forms. The following describes several possible product forms.

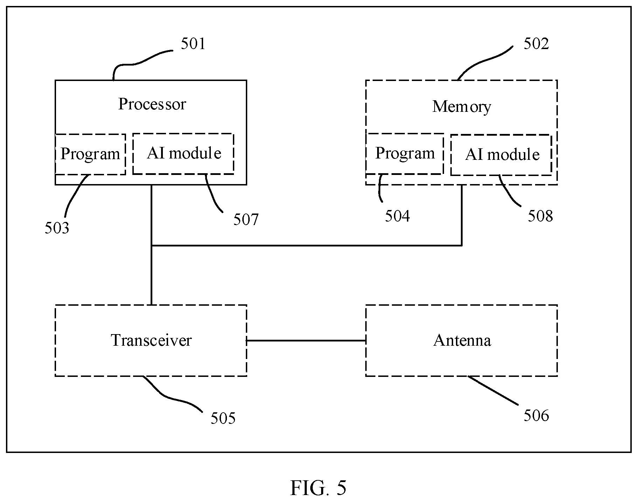

Refer to FIG. 5. An embodiment of this application further provides a communication apparatus. It may be understood that the communication apparatus includes technical means (means) in necessary forms, for example, modules, units, elements, circuits, or interfaces, which are appropriately configured together to implement the solution. The communication apparatus may be the network device or the terminal device in the foregoing method embodiments, or may be a component (for example, a chip) in these devices, to implement the method performed by the network device or the terminal device in the foregoing method embodiments.

The communication apparatus includes one or more processors 501. The processor 501 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 501 may include a program 503 (which may also be sometimes referred to as code or instructions). The program 503 may be run on the processor 501, so that the communication apparatus performs the method performed by the first terminal, the second terminal, or the network device in the foregoing method embodiments.

In another possible design, the communication apparatus includes a circuit (not shown in FIG. 5). The circuit is configured to implement a function of the method performed by the first terminal, the second terminal, or the network device in the foregoing method embodiments.

Optionally, the communication apparatus may include one or more memories 502 storing a program 504 (which may also be sometimes referred to as code or instructions). The program 504 may be run on the processor 501, so that the communication apparatus performs the method performed by the first terminal, the second terminal, or the network device in the foregoing method embodiments.

Optionally, the processor 501 and/or the memory 502 may include AI modules 507 and 508, and the AI module is configured to implement an AI-related function. The AI module may be implemented by software, hardware, or a combination of software and hardware. For example, the AI module may include a RIC module. For example, the AI module may be a near-real-time RIC or a non-real-time RIC.

Optionally, the processor 501 and/or the memory 502 may further store data. The processor and the memory may be separately arranged, or may be integrated together.

Optionally, the communication apparatus may further include a transceiver 505 and/or an antenna 506. The processor 501 may also be sometimes referred to as a processing unit, and controls the communication apparatus (for example, a RAN node or a terminal). The transceiver 505 may also be sometimes referred to as a transceiver unit, a transceiver machine, a transceiver circuit, a transceiver, or the like, and is configured to implement a transceiver function of the communication apparatus through the antenna 506.

It should be understood that the processor mentioned in this embodiment of this application may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another proper type.

Based on a same technical concept, an embodiment of this application further provides a computer-readable storage medium. The storage medium stores a computer program or instructions; and when the computer program or the instructions are executed by a communication apparatus, the method steps performed by the network device or the terminal device in the foregoing method embodiments are implemented.

Based on a same technical concept, an embodiment of this application further provides a computer program product. The computer program product includes a computer program or instructions; and when the computer program or the instructions are run by a communication apparatus, the method steps performed by the network device or the terminal device in the foregoing method embodiments are performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of the claims of this application and their equivalent technologies.

**Claims**

1. A measurement reference signal SRS configuration method, applied to a network device, and comprising:

   determining a first SRS resource set and a first SRS base sequence group, wherein a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells comprise a first cell, the combination of the first SRS resource set and the first SRS base sequence group corresponds to the first cell, M is a positive integer greater than 1, and N is a positive integer greater than 1; and
   configuring, based on the first SRS resource set and the first SRS base sequence group, a terminal device in the first cell to send an SRS.

2. The method according to claim 1, wherein an identifier of the first cell and an identifier of the first SRS resource set satisfy the following relationship:

$$\lambda = (X + n) \bmod M,$$

   wherein X is the identifier of the first cell, $\lambda$ is the identifier of the first SRS resource set, and n is an offset.

3. The method according to claim 2, wherein the identifier of the first cell and an identifier of the first SRS base sequence group satisfy the following relationship:

$$\alpha = (X + p) + (\lfloor (X + q)/N \rfloor \bmod M),$$

   wherein $\alpha$ is the identifier of the first SRS base sequence group, and p and q are offsets.

4. The method according to claim 2, wherein the identifier of the first cell and an identifier of the first SRS base sequence group satisfy the following relationship:

$$\alpha = (X + p) + (\lceil (X + q)/N \rceil \bmod M),$$

   wherein $\alpha$ is the identifier of the first SRS base sequence group, and p and q are offsets.

5. The method according to any one of claims 1 to 4, wherein the identifier of the first cell is a physical cell identifier PCI, a transmission reception point TRP identifier, or a virtual cell identifier.

6. The method according to any one of claims 1 to 5, wherein N is a positive integer less than or equal to 30.

7. The method according to any one of claims 1 to 6, wherein the configuring, based on the first SRS resource set and the first SRS base sequence group, the terminal device in the first cell to send the SRS comprises:
   sending first SRS configuration information to a first terminal device in the first cell based on the first SRS resource set and the first SRS base sequence group, wherein the first SRS configuration information indicates a first SRS resource and the first SRS base sequence group, and the first SRS resource belongs to the first SRS resource set.

8. An SRS configuration method, applied to a first terminal device in a first cell, and comprising:

   receiving first SRS configuration information from a network device, wherein the first SRS configuration information indicates a first SRS resource and a first SRS base sequence group; and the first SRS resource belongs to a first SRS resource set, a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells comprise the first cell, the combination of the first SRS resource set and the first SRS base sequence group corresponds to the first cell, M is a positive integer greater than 1, and N is a positive integer greater than 1; and

sending an SRS on the first SRS resource based on the first SRS base sequence group.

9. The method according to claim 8, wherein

an identifier of the first cell and an identifier of the first SRS resource set satisfy the following relationship:

$$\lambda = (X + n) \bmod M,$$

wherein X is the identifier of the first cell, $\lambda$ is the identifier of the first SRS resource set, and n is an offset.

10. The method according to claim 9, wherein

the identifier of the first cell and an identifier of the first SRS base sequence group satisfy the following relationship:

$$\alpha = (X + p) + (\lfloor (X + q)/N \rfloor \bmod M),$$

wherein $\alpha$ is the identifier of the first SRS base sequence group, and p and q are offsets.

11. The method according to claim 9, wherein

the identifier of the first cell and an identifier of the first SRS base sequence group satisfy the following relationship:

$$\alpha = (X + p) + (\lceil (X + q)/N \rceil \bmod M),$$

wherein
$\alpha$ is the identifier of the first SRS base sequence group, and p and q are offsets.

12. The method according to any one of claims 8 to 11, wherein the identifier of the first cell is a physical cell identifier PCI, a transmission reception point TRP identifier, or a virtual cell identifier.

13. The method according to any one of claims 8 to 12, wherein N is a positive integer less than or equal to 30.

14. A communication apparatus, comprising:

a processing module, configured to determine a first SRS resource set and a first SRS base sequence group, wherein a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells comprise a first cell, the combination of the first SRS resource set and the first SRS base sequence group corresponds to the first cell, M is a positive integer greater than 1, and N is a positive integer greater than 1; and

a transceiver module, configured to configure, based on the first SRS resource set and the first SRS base sequence group, a terminal device in the first cell to send an SRS.

15. The apparatus according to claim 14, wherein an identifier of the first cell and an identifier of the first SRS resource set satisfy the following relationship:

$$\lambda = (X + n) \bmod M,$$

wherein X is the identifier of the first cell, λ is the identifier of the first SRS resource set, and n is an offset.

16. The apparatus according to claim 15, wherein the identifier of the first cell and an identifier of the first SRS base sequence group satisfy the following relationship:

$$\alpha = (X + p) + (\lfloor (X + q)/N \rfloor \bmod M),$$

wherein α is the identifier of the first SRS base sequence group, and p and q are offsets.

17. The apparatus according to claim 15, wherein the identifier of the first cell and an identifier of the first SRS base sequence group satisfy the following relationship:

$$\alpha = (X + p) + (\lceil (X + q)/N \rceil \bmod M),$$

wherein α is the identifier of the first SRS base sequence group, and p and q are offsets.

18. The apparatus according to any one of claims 14 to 17, wherein the identifier of the first cell is a physical cell identifier PCI, a transmission reception point TRP identifier, or a virtual cell identifier.

19. The apparatus according to any one of claims 14 to 18, wherein N is a positive integer less than or equal to 30.

20. The apparatus according to any one of claims 14 to 19, wherein the transceiver module is configured to:
send first SRS configuration information to a first terminal device in the first cell based on the first SRS resource set and the first SRS base sequence group, wherein the first SRS configuration information indicates a first SRS resource and the first SRS base sequence group, and the first SRS resource belongs to the first SRS resource set.

21. A communication apparatus, comprising:

a transceiver module, configured to receive first SRS configuration information from a network device, wherein the first SRS configuration information indicates a first SRS resource and a first SRS base sequence group; the first SRS resource belongs to a first SRS resource set, a combination of the first SRS resource set and the first SRS base sequence group is one of M*N combinations obtained by arranging and combining M SRS resource sets and N SRS base sequence groups, the M*N combinations are in one-to-one correspondence with M*N cells, resources of any two SRS resource sets in the M SRS resource sets do not overlap, the M*N cells comprise a first cell, the combination of the first SRS resource set and the first SRS base sequence group corresponds to the first cell, M is a positive integer greater than 1, and N is a positive integer greater than 1; and
the transceiver module is further configured to send an SRS on the first SRS resource based on the first SRS base sequence group.

22. The apparatus according to claim 21, wherein

an identifier of the first cell and an identifier of the first SRS resource set satisfy the following relationship:

$$\lambda = (X + n) \bmod M,$$

wherein
X is the identifier of the first cell, λ is the identifier of the first SRS resource set, and n is an offset.

23. The apparatus according to claim 22, wherein

the identifier of the first cell and an identifier of the first SRS base sequence group satisfy the following relationship:

$$\alpha = (X + p) + (\lfloor (X + q)/N \rfloor \bmod M),$$

wherein
α is the identifier of the first SRS base sequence group, and p and q are offsets.

24. The apparatus according to claim 22, wherein

the identifier of the first cell and an identifier of the first SRS base sequence group satisfy the following relationship:

$$\alpha = (X + p) + (\lceil (X + q)/N \rceil \bmod M),$$

wherein
$\alpha$ is the identifier of the first SRS base sequence group, and p and q are offsets.

25. The apparatus according to any one of claims 21 to 24, wherein
the identifier of the first cell is a physical cell identifier **PCI,** a transmission reception point **TRP** identifier, or a virtual cell identifier.

26. The apparatus according to any one of claims 21 to 25, wherein N is a positive integer less than or equal to 30.

27. A communication apparatus, comprising a processor, wherein the processor is coupled to a memory, the memory is configured to store a program or instructions, and when the program or the instructions are executed by the processor, the communication apparatus is caused to perform the method according to any one of claims 1 to 7, or the communication apparatus is caused to perform the method according to any one of claims 8 to 13.

28. A computer-readable storage medium, wherein the storage medium stores a computer program or instructions; and when the computer program or the instructions are executed by a communication apparatus, the method according to any one of claims 1 to 7 is performed, or the method according to any one of claims 8 to 13 is implemented.

29. A communication system, comprising the communication apparatus according to any one of claims 14 to 20 and the communication apparatus according to any one of claims 21 to 26.

30. A computer program product comprising instructions, wherein when the computer program product runs on a computer, the computer is caused to perform the method according to any one of claims 1 to 7 or the method according to any one of claims 8 to 13.

FIG. 1

S201

A network device determines a first SRS resource set and a first SRS base sequence group

S202

The network device configures, based on the first SRS resource set and the first SRS base sequence group, a terminal device in a first cell to send an SRS

FIG. 2

Network
device

First
terminal
device

S201

The network device determines a first
SRS resource set and a first SRS base
sequence group

S2021. First SRS
configuration information

S2022. The first terminal device
sends an SRS on a first SRS
resource based on the first SRS
base sequence group, and the
network device receives the SRS

FIG. 3

Processing
module          401

Transceiver
module          402

FIG. 4

FIG. 5

## INTERNATIONAL SEARCH REPORT

| International application No. |
| --- |
| **PCT/CN2024/106938** |

### A. CLASSIFICATION OF SUBJECT MATTER

H04L 25/02(2006.01)i; H04W 72/04(2023.01)i

According to International Patent Classification (IPC) or to both national classification and IPC

### B. FIELDS SEARCHED

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; EPTXT; WOTXT; 3GPP: 测量参考信号, 探测参考信号, 参考信号, 资源, 集, 基序列, 基, 序列, 组, 标识, 重合, 重叠, 交叠, 小区, 干扰, 冲突, 碰撞, sounding reference signal, SRS, resource, base sequence, group, identity, ID, overlap, cell, interference, conflict, collision

### C. DOCUMENTS CONSIDERED TO BE RELEVANT

| Category* | Citation of document, with indication, where appropriate, of the relevant passages | Relevant to claim No. |
| --- | --- | --- |
| A | WO 2021208109 A1 (HUAWEI TECHNOLOGIES CO., LTD.) 21 October 2021 (2021-10-21) <br> description, page 11, line 13-page 24, line 4 | 1-30 |
| A | US 2023232340 A1 (SAMSUNG ELECTRONICS CO., LTD.) 20 July 2023 (2023-07-20) <br> entire document | 1-30 |
| A | CN 115334660 A (HUAWEI TECHNOLOGIES CO., LTD.) 11 November 2022 (2022-11-11) <br> entire document | 1-30 |
| A | ERICSSON. "UL Reference Signals for NR Positioning" <br> *3GPP TSG-RAN WG1 Meeting #99bis R1-1913136*, 09 November 2019 (2019-11-09), <br> entire document | 1-30 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 September 2024** | **30 September 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106938**

| Patent document cited in search report | | | Publication date (day/month/year) | Patent family member(s) | | | Publication date (day/month/year) |
|---|---|---|---|---|---|---|---|
| WO | 2021208109 | A1 | 21 October 2021 | WO | 2021208390 | A1 | 21 October 2021 |
| | | | | CN | 115428378 | A | 02 December 2022 |
| US | 2023232340 | A1 | 20 July 2023 | WO | 2023137202 | A1 | 20 July 2023 |
| | | | | EP | 4213398 | A2 | 19 July 2023 |
| CN | 115334660 | A | 11 November 2022 | WO | 2022237625 | A1 | 17 November 2022 |

Form PCT/ISA/210 (patent family annex) (July 2022)

**REFERENCES CITED IN THE DESCRIPTION**

**Patent documents cited in the description**

- CN 202311023632